# EUROPEAN PATENT APPLICATION

(11) **EP 2 209 159 A1**
(43) Date of publication of application: **21.07.2010**
(21) Application number: 10159557.7
(22) Date of filing: 29.08.2006
(51) Int. Cl.: H01Q 1/24, H01Q 19/22, H01Q 19/28, H04B 1/38

(54) **Mobile wireless communications device including an electrically conductive, electrically floating element and related methods**

(62) Divisional of application: 06119724.0
(71) Applicant: RESEARCH IN MOTION LIMITED, Waterloo, Ontario N2L 3W8 (CA)
(72) Inventor: Qi, Yihong, St. Agatha Ontario N0B 2LO (CA); Man, Ying Tong, Waterloo Ontario N2V 2V8 (CA); Bandurska, Krystyna, Waterloo Ontario N2T 2K7 (CA)
(74) Representative: Phillips, Emily Elizabeth

(57) **Abstract**

A mobile wireless communications device (20) may include a portable housing (24) having a surface, a printed circuit board (PCB) carried by the portable housing, and wireless transceiver circuitry carried by the PCB. The device may further include an antenna (35) connected to the transceiver, and at least one electrically floating, electrically conductive, antenna beam shaping element (30a,b) secured to the surface of the portable housing (24) for directing a beam pattern of the antenna (35).

## Description

### Field of the Invention

The present invention relates to the field of communications devices, and, more particularly, to mobile wireless communications devices and related methods.

### Background

Cellular communications systems continue to grow in popularity and have become an integral part of both personal and business communications. Cellular telephones allow users to place and receive voice calls most anywhere they travel. Moreover, as cellular telephone technology has increased, so too has the functionality of cellular devices and the different types of devices available to users. For example, many cellular devices now incorporate personal digital assistant (PDA) features such as calendars, address books, task lists, etc. Moreover, such multi-function devices may also allow users to wirelessly send and receive electronic mail (email) messages and access the Internet via a cellular network and/or a wireless local area network (WLAN), for example.

Even so, as the functionality of cellular communications devices continues to increase, so too does the demand for smaller devices which are easier and more convenient for users to carry. One challenge this poses for cellular device manufacturers is designing antennas that provide desired operating characteristics within the relatively limited amount of space available for the antenna.

One approach for reducing phone size is to use flip phones having top and bottom housings connected with a hinge. The housings may be closed when the phone is not in use so that it is more compact and easier for a user to carry. One exemplary antenna system for a flip style cellular phone is described in U.S. Patent No. 6,765,536. In particular, the antenna system includes an external antenna element carried on the top of the lower housing, and a parasitic element carried by the top housing so that when the phone is flipped open the parasitic element is in close proximity to the antenna element. A tuning circuit carried by the lower housing is electrically coupled to the parasitic element. The tuning circuit is variable to adjust the parasitic load on the antenna element to provide variable operating frequencies and bandwidths for the phone.

External cell phone antennas are advantageous in that they are spaced apart from the user's head, which makes it easier for phone manufacturers to comply with applicable specific absorption rate (SAR) requirements, for example. This is because the farther the radiating element of the cell phone antenna system is from the user, the less intense the radiation exposure to the user. Yet, many users prefer internal antennas over external antennas, as external antennas are prone to catch on objects and become damaged, for example. Yet, with the ever increasing trend towards smaller cell phone sizes, for a relatively small phone having an internal antenna, this may place the antenna in relatively close proximity to the user's ear, which may make complying with applicable SAR and/or hearing aid compatibility (HAC) requirements potentially difficult for manufacturers.

### Brief Description of the Drawings

FIG. 1 is a perspective view of a mobile wireless communications device in accordance with one exemplary embodiment next to a user wearing an electronic hearing aid.

FIG. 2 is a schematic front view of the PCB and electrically floating, electrically conductive antenna beam shaping elements of the mobile wireless communications device of FIG. 1.

FIG. 3 is a schematic rear view of the PCB and electrically floating, electrically conductive antenna beam shaping elements of the mobile wireless communications device of FIG. 1.

FIG. 4 is a schematic rear view of the portable housing and removable battery access panel of the mobile wireless communications device of FIG. 1.

FIG. 5 is a schematic view of an inner surface of the removable battery access panel of FIG. 4 with the electrically floating, electrically conductive antenna beam shaping elements secured thereto.

FIG. 6 is a schematic view of an alternative embodiment of the battery access panel of FIG. 5 with a single electrically floating, electrically conductive antenna beam shaping element secured thereto and with a cover layer thereon.

FIG. 7 is a schematic block diagram of the mobile wireless communications device of FIG. 1 illustrating additional exemplary components thereof.

### Detailed Description of the Preferred Embodiments

The present description is made with reference to the accompanying drawings, in which preferred embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation is used to indicate similar elements in alternative embodiments.

Generally speaking, a mobile wireless communications device is disclosed herein which may include a portable housing having a surface, a printed circuit board (PCB) carried by the portable housing, and wireless transceiver circuitry carried by the PCB. Moreover, the device may further include an antenna connected to the transceiver, and at least one electrically floating, electrically conductive, antenna beam shaping element secured to the surface of the portable housing for directing a beam pattern of the antenna.

More particularly, the device may further include an adhesive layer for adhesively securing the at least one beam shaping element to the surface of the portable housing. In addition, the at least one beam shaping element may include at least one generally rectangular metal layer. Also, the surface of the portable housing may have a color, and the device may further include a cover layer over the metal layer having the color of the portable housing.

The PCB may have a top portion and a bottom portion, and the antenna may be carried by the bottom portion of the PCB, for example. Additionally, the device may further include a battery carried within the portable housing and connected to the PCB, and the portable housing may include a removable access panel for accessing the battery. As such, the at least one beam shaping element may be secured to a surface of the removable access panel.

The surface of the portable housing may be an interior surface and/or an exterior surface. Moreover, the at least one beam shaping element may comprise a plurality thereof. Furthermore, the at least one beam shaping element and the antenna need not be vertically overlapping. The at least one beam shaping element may be positioned substantially parallel to a longitudinal axis of the portable housing, for example. Also by way of example, the wireless transceiver may be a cellular transceiver.

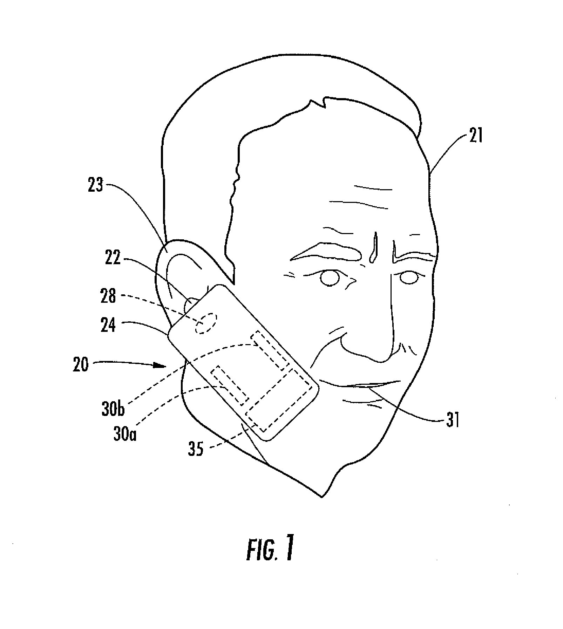

Referring initially to FIGS. 1 through 5, a mobile wireless communications device, such as a cellular telephone **20,** is for a user **21.** In some applications, the user **21** may be wearing an electronic hearing aid **22** in an ear **23** of the user. In particular, the cellular telephone **20** may advantageously provide desired hearing aid compatibility (HAC) for users with hearing aids in some implementations, as will be discussed further below, but need not be used with hearing aids in all embodiments.

The cellular telephone **20** illustratively includes a portable housing **24** and an audio output transducer **28** (e.g., a speaker) carried by the housing and accessible to the electronic hearing aid **22** of the user **21** adjacent the top of the housing as shown. An audio input transducer (e.g., microphone) is also carried by the housing **24** and accessible to a mouth **31** of the user **21** adjacent the bottom of the housing. Although described herein with reference to a cellular device, it should be noted that the present disclosure may be applicable to other wireless communications devices such as wireless LAN devices, etc.

The cellular telephone 20 further illustratively includes a printed circuit board (PCB) 37 carried by the housing 24, and an antenna 35 and a wireless (e.g., cellular) transceiver 38 carried on a front surface of the PCB. Of course, these components may be carried on the back surface or in positions other than those shown in other embodiments. The PCB 37 further illustratively includes an antenna feed line 40 connecting the antenna 35 to the wireless transceiver 38. By way of example, the antenna 35 may be formed by a plurality of conductive traces on the PCB 37, for example, as will be appreciated by those skilled in the art. The cellular telephone 20 may further include other components connected to the PCB 37 such as a display, battery, keypad, processing circuitry, etc., as will be discussed further below.

The antenna 35 is positioned adjacent a bottom 42b of the PCB 37, and therefore the bottom of the housing 24, which advantageously helps reduce coupling to the electronic hearing aid 22 of the user 21 with respect to traditional top mounted, internal cellular phone antennas. This is because the electronic hearing aid 22 of the user 21 is advantageously further separated from the antenna 35 when the cellular telephone 20 is held adjacent the user's ear 23 than would otherwise be the case with a typical top mounted, internal cellular telephone antenna, for example. Moreover, this antenna placement also helps space the antenna 35 farther apart from the user's brain, which in turn helps to reduce the SAR of the cellular telephone 20 again with a respect to a traditional top mounted, internal cellular phone antenna.

Nonetheless, if the portable housing 24 has a relatively small form factor or footprint for user convenience, this means that the antenna **35** may still be positioned relatively close to the user's ear **23,** thus potentially elevating the SAR or coupling to the hearing aid **22** to unacceptable levels. As such, the cellular telephone **20** may therefore advantageously include electrically floating, electrically conductive, antenna beam shaping elements **30a, 30b** for helping to direct the beam pattern of the antenna **35** away from the user and the hearing aid **22,** as will be appreciated by those skilled in the art.

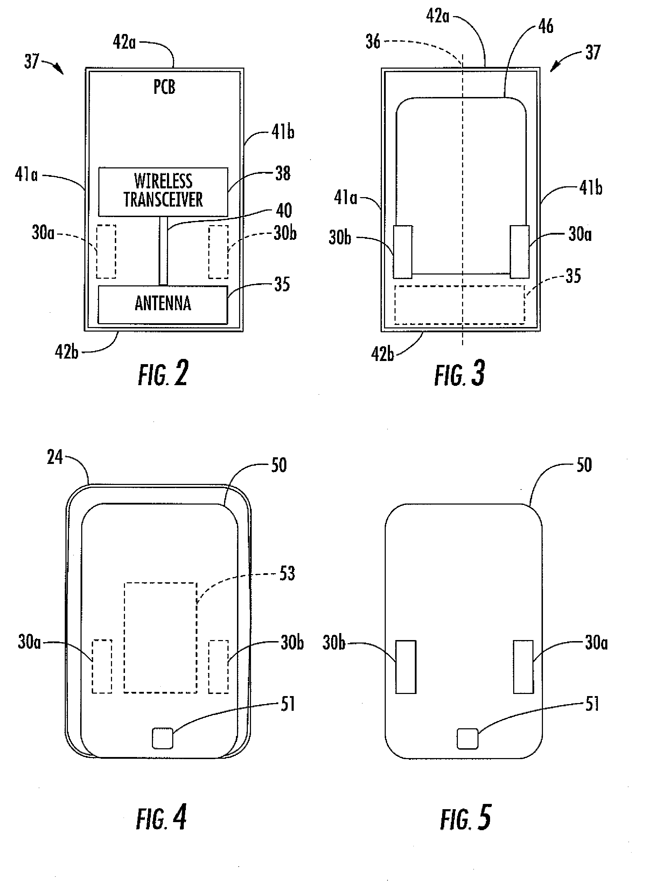

In the present embodiment, a pair of beam shaping elements **30a, 30b** are included although other numbers of beam shaping elements may be used, as will be discussed further below. The beam shaping elements **30a, 30b** may be secured to an internal and/or an external surface of the portable housing **24.** More particularly, as shown in FIGS. **4** and 5, the cellular telephone **20** illustratively includes a battery **53** carried within the portable housing **24** and connected to the PCB 37, and a removable access panel **50** provides access to the battery. As such, in the illustrated embodiment the beam shaping elements **30a, 30b** are secured to the inner surface of the removable access panel (FIG. 5). It should be noted that the beam shaping elements **30a, 30b** are shown overlying the PCB **37** in FIGS. 2 and 3 to illustrate their position relative to the antenna **35,** but the beam shaping elements in the exemplary embodiment do not actually contact the PCB (i.e., they are carried by the housing **24** or removable battery access panel **50,** which is spaced apart from the PCB).

In the exemplary embodiment, the beam shaping elements **30a, 30b** are generally rectangular metal layers that are secured to the inner surface of the access panel **50** with an adhesive layer. However, the beam shaping elements **30a, 30b** may take different shapes in different embodiments, and may be secured to the housing **24** and/or access panel **50** by suitable methods of attachment other than an adhesive. For example, the beam shaping elements **30a, 30b** may be printed on the housing/access panel with conductive ink, similar to conductive traces on a circuit board.

Furthermore, the beam shaping elements **30a, 30b** and the antenna **35** are preferably not vertically overlapping with one another so that antenna performance is not adversely affected. By way of example, the beam shaping elements **30a, 30b** may be positioned substantially parallel to a longitudinal axis **36** of the portable housing, as shown in FIG. 3, although other placements may also be possible in different embodiments, as will be appreciated by those skilled in the art. Also by way of example, each beam shaping element **30a, 30b** may have a width in a range of about 2 to 15 mm, and a length in a range of about 2 to 10 cm, although other sizes may also be used in some embodiments. As will be appreciated by those skilled in the art, the size, number, and placement of the beam shaping elements **30a, 30b** will have an effect on the performance of the antenna **35.** Thus, the particular size/number/placement selection may vary depending upon the given implementation and the applicable antenna performance characteristics.

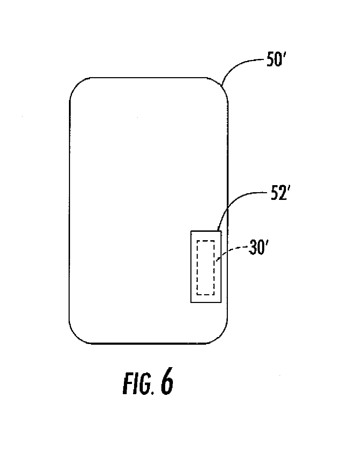

Referring now to FIG. 6, an alternative embodiment is shown in which a single beam shaping element **30'** is used, rather than the pair of beam shaping elements **30a, 30b** discussed above. Moreover, in this example a cover layer **52'** is placed on the single beam shaping element **30'.** The cover layer **52'** may be a dielectric layer, such as a dielectric tape layer, for example. The cover layer **52'** may advantageously help protect the beam shaping element **30'** so that it not damaged or altered and SAR and/or HAC performance potentially degraded. Moreover, the cover layer **52'** may also advantageously conceal the beam shaping elements **30',** for example, by making the cover layer the same color as a color of the portable housing **30'** and/or the access panel **50'.**

The number of beam shaping elements **30** to be used in a given cellular telephone **20** will generally depend upon the performance and SAR/HAC requirements for the particular phone. More specifically, Applicants have found that in one exemplary implementation a single beam shaping element **30** was adequate to direct the antenna **35** beam away from the user enough to comply with applicable FCC SAR regulations. Applicants have also found that adding a second beam shaping element **30** in the same implementation provided additional beam shaping such that coupling with the hearing aid **22** was reduced sufficiently to also comply with applicable FCC HAC regulations. Additional beam shaping elements may also be appropriate in certain implementations, as will be appreciated by those skilled in the art.

A method aspect is for improving specific absorption rate (SAR) of a mobile wireless communications device **20** including a portable housing **24** having a surface, a PCB **37** carried by the portable housing, wireless transceiver circuitry **38** carried by the PCB, and an antenna **35** connected to the transceiver. The method may include securing one or more electrically floating, electrically conductive, antenna beam shaping elements **30a, 30b** to the surface of the portable housing **24** for directing a beam pattern of the antenna **35** to advantageously reduce a rate of absorption of radio frequency (RF) energy from the mobile wireless communications device that is absorbed by a user **21.**

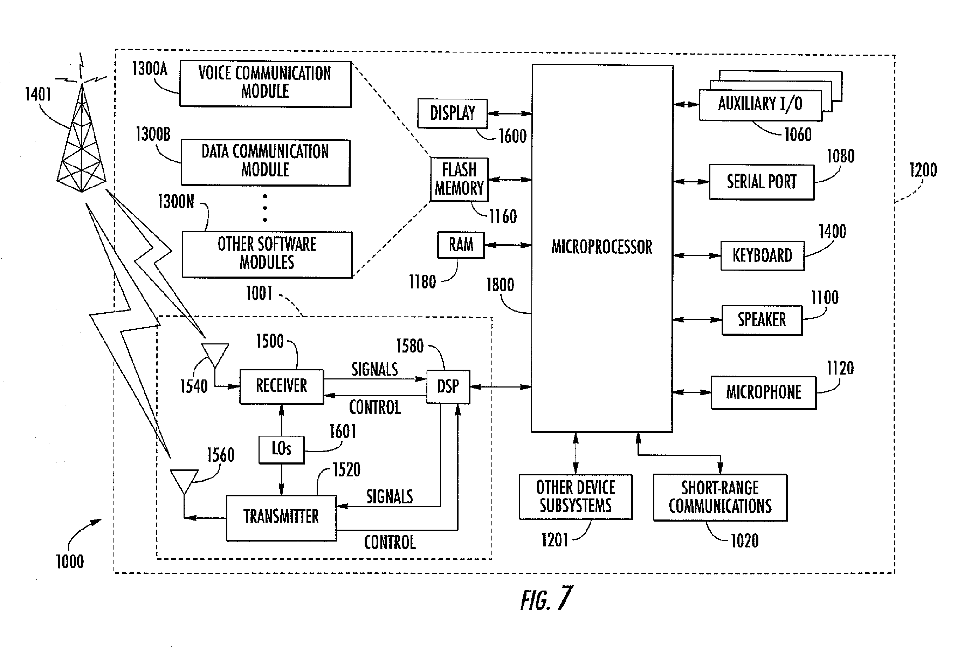

Other exemplary components of a hand-held mobile wireless communications device **1000** are now described in the example below with reference to FIG. 7. The device **1000** illustratively includes a housing **1200,** a keypad **1400** and an output device **1600.** The output device shown is a display **1600,** which is preferably a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400** by the user.

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 7. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** is preferably a two-way RF communications device having voice and data communications capabilities. In addition, the mobile device **1000** preferably has the capability to communicate with other computer systems via the Internet.

Operating system software executed by the processing device **1800** is preferably stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device 1000. A predetermined set of applications that control basic device operations, such as data and voice communications **1300A** and **1300B,** may be installed on the device **1000** during manufacture. In addition, a personal information manager (PIM) application may be installed during manufacture. The PIM is preferably capable of organizing and managing data items, such as e-mail, calendar events, voice mails, appointments, and task items. The PIM application is also preferably capable of sending and receiving data items via a wireless network **1401.** Preferably, the PIM data items are seamlessly integrated, synchronized and updated via the wireless network **1401** with the device user's corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter 1520, and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex^{™}, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore requires a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device user may also compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone 1120. Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, or a Bluetooth™ communications module to provide for communication with similarly-enabled systems and devices.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.
There is disclosed a mobile wireless communications device comprising:
a portable housing having a surface;
a printed circuit board (PCB) carried by said portable housing;
wireless transceiver circuitry carried by said PCB;
an antenna connected to said transceiver; and
at least one electrically floating, electrically conductive, antenna beam shaping element secured to the surface of said portable housing for directing a beam pattern of said antenna.
The mobile wireless communications device preferably further comprises an adhesive layer for adhesively securing said at least one beam shaping element to the surface of said portable housing.
The at least one beam shaping element preferably comprises at least one generally rectangular metal layer.
The surface of said portable housing preferably has a color, and the device further comprises a cover layer over said at least one beam shaping element having the color of said portable housing.
The PCB preferably comprises a top portion and a bottom portion and the antenna is carried by the bottom portion of said PCB.
The mobile wireless communications device preferably further comprises a battery carried within said portable housing and connected to said PCB; wherein said portable housing comprises a battery access panel to which said at least one beam shaping element is secured.
The surface of said portable housing preferably comprises an interior or exterior surface.
The at least one beam shaping element preferably comprises a plurality thereof.
The at least one beam shaping element and said antenna preferably are not vertically overlapping.
The at least one beam shaping element is preferably positioned substantially parallel to a longitudinal axis of said portable housing.
The wireless transceiver preferably comprises a cellular transceiver.
There is disclosed a method for reducing a specific absorption rate (SAR) of a mobile wireless communications device comprising a portable housing having a surface, a printed circuit board (PCB) carried by the portable housing, wireless transceiver circuitry carried by the PCB, and an antenna connected to the transceiver, the method comprising:
securing at least one electrically floating, electrically conductive, antenna beam shaping element to the surface of the portable housing for directing a beam pattern of the antenna to reduce the SAR of the mobile wireless communications device.
   Securing preferably comprises adhesively securing the at least one beam shaping element to the surface of the portable housing.
   The at least one beam shaping element preferably comprises at least one generally rectangular metal layer.
   The surface of the portable housing preferably has a color, the method further comprising providing a cover layer over the metal layer having the color of the portable housing.
   The PCB preferably comprises a top portion and a bottom portion, and wherein the antenna is carried by the bottom portion of the PCB.
   The portable wireless communications device preferably further comprises a battery carried within the portable housing and connected to the PCB; wherein the portable housing comprises a battery access panel to which the at least one beam shaping element is secured.
   The surface of the portable housing preferably comprises an interior or exterior surface.
   The at least one beam shaping element preferably comprises a plurality thereof.
   The at least one beam shaping element and the antenna are preferably not vertically overlapping.

## Claims

1. A mobile wireless communications device (20, 1000) comprising:
a portable housing (24, 1200) having a surface; a printed circuit board PCB (37) carried by said portable housing;
an output speaker (28, 1100) carried by said portable housing at a top of the portable housing accessible to an ear (23) of a user (21);
an input microphone (1120) carried by said portable housing at a bottom of the portable housing accessible to a mouth (31) of the user;
wireless transceiver circuitry (38) carried by said PCB;
an antenna (135, 1540) carried by said PCB at the bottom of the portable housing and connected to said transceiver, said antenna comprising at least one conductive circuit trace on said PCB; the mobile wireless communications device further comprising:
at least one electrically floating, electrically conductive, antenna beam shaping element (30) secured to a the surface of said portable housing for directing a beam pattern of said antenna;
said at least one beam shaping element being positioned so that said at least one beam shaping element and said antenna are spaced apart from each other along a longitudinal axis of the device.

2. The mobile wireless communications device (20, 1000) of Claim 1 further comprising an adhesive layer for adhesively securing said at least one beam shaping element to the surface of said portable housing (24, 1200).

3. The mobile wireless communications device (20,1000) of Claim 1 wherein said at least one beam shaping element (30) comprises at least one generally rectangular metal layer.

4. The mobile wireless communications device (20, 1000) of Claim 1 wherein the surface of said portable housing (24, 1200) has a color, and further comprising a cover layer over said at least one beam shaping element (30) having the color of said portable housing.

5. The mobile wireless communications device (20, 1000) of Claim 1 further comprising a battery carried within said portable housing (24, 1200) and connected to said PCB (37); wherein said portable housing comprises a battery access panel to which said at least one beam shaping element(30) is secured.

6. The mobile wireless communications device (20, 1000) of Claim 1 wherein the surface of said portable housing (24, 1200) comprises an interior surface.

7. The mobile wireless communications device (20, 1000) of Claim 1 wherein the surface of said portable housing (24, 1200) comprises an exterior surface.

8. The mobile wireless communications device (20, 1000) of Claim 1 wherein said at least one beam shaping element comprises a plurality thereof.

9. The mobile wireless communications device (20, 1000) of Claim 1 wherein said at least one beam shaping element is positioned substantially parallel to a longitudinal axis of said portable housing.

10. The mobile wireless communications device (20, 1000) of Claim 1 wherein said wireless transceiver comprises a cellular transceiver.

11. A method for reducing a specific absorption rate SAR of a mobile wireless communications device (20, 1000) comprising a portable housing (24, 1200) a printed circuit board (PCB) carried by the portable housing, an output speaker (28, 1100) carried by the portable housing at a top of the portable housing accessible to an ear (23) of a user (21), an input microphone (1120) carried by the portable housing at a bottom of the portable housing accessible to a mouth (31) of the user, wireless transceiver circuitry (38) carried by the PCB, and an antenna carried by the PCB at the bottom of the portable housing and connected to the transceiver, the method comprising:
securing at least one electrically floating, electrically conductive, antenna beam shaping element (30) to a surface of the portable housing for directing a beam pattern of the antenna so that the at least one beam shaping element is positioned so that the at least one beam shaping element and the antenna are spaced apart from each other along a longitudinal axis of the device.

12. The method of Claim 11 wherein securing comprises adhesively securing the at least one beam shaping element to the surface of the portable housing (24, 1200).

13. The method of Claim 11 wherein the at least one beam shaping element comprises at least one generally rectangular metal layer.

14. The method of Claim 11 wherein the surface of the portable housing (24, 1200) has a color, and further comprising providing a cover layer over the metal layer having the color of the portable housing.

15. The method of Claim 11 wherein the portable wireless communications device (20, 1000) further comprises a battery carried within the portable housing (24, 1200) and connected to the PCB (37); wherein the portable housing comprises a battery access panel to which the at least one beam shaping element (30) is secured.19

16. The method of Claim 11 wherein the surface of the portable housing (24, 1200) comprises an interior surface.

17. The method of Claim 11 wherein the surface of the portable housing comprises an exterior surface.

18. The method of Claim 11 wherein the at least one beam shaping element (30) comprises a plurality thereof.
